(19) Europäisches Patentamt
European Patent Office
Office européen des brevets

(11) **EP 4 521 329 A1**

(12) **EUROPEAN PATENT APPLICATION**
published in accordance with Art. 153(4) EPC

(43) Date of publication:
**12.03.2025 Bulletin 2025/11**

(21) Application number: **23825845.3**

(22) Date of filing: **14.03.2023**

(51) International Patent Classification (IPC):
***G06Q 40/04*** (2012.01)

(52) Cooperative Patent Classification (CPC):
**G06Q 40/04; H04L 9/40; H04L 67/1042**

(86) International application number:
**PCT/CN2023/081316**

(87) International publication number:
**WO 2023/246187 (28.12.2023 Gazette 2023/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.06.2022 CN 202210705932**

(71) Applicant: **Huawei Cloud Computing
Technologies Co., Ltd.
Guiyang, Guizhou 550025 (CN)**

(72) Inventors:
• **ZHANG, Xiaotian
Guiyang, Guizhou 550025 (CN)**
• **ZHANG, Ziyi
Guiyang, Guizhou 550025 (CN)**
• **QU, Qiang
Guiyang, Guizhou 550025 (CN)**

(74) Representative: **Isarpatent
Patent- und Rechtsanwälte
Barth Hassa Peckmann & Partner mbB
Friedrichstraße 31
80801 München (DE)**

(54) **MANAGEMENT METHOD FOR BLOCKCHAIN NETWORK, AND RELATED DEVICE**

(57) This application provides a blockchain network management method, including: A management platform receives an inter-blockchain application submitted by a user; and invokes a blockchain platform management interface based on the inter-blockchain application to install an inter-blockchain contract for a first blockchain network and a second blockchain network separately. The inter-blockchain contract is used by the first blockchain network and the second blockchain network to establish a connection to a relay apparatus separately, and perform an inter-blockchain transaction via the relay apparatus. In this method, the management platform installs an inter-blockchain contract for different blockchain networks such as a heterogeneous blockchain network through a same set of blockchain platform management interfaces, to integrate an inter-blockchain capability, and truly streamline services of the blockchain networks. Data can be migrated between different blockchain networks without adapting to a heterogeneous kernel, thereby reducing improvement costs.

FIG. 1

**Description**

This application claims priority to Chinese Patent Application No. 202210705932.0, filed with the China National Intellectual Property Administration on June 21, 2022 and entitled "BLOCKCHAIN NETWORK MANAGEMENT METHOD AND RELATED DEVICE", which is incorporated herein by reference in its entirety.

**TECHNICAL FIELD**

This application relates to the field of blockchain technologies, and in particular, to a blockchain network management method, a platform, a computer cluster, a computer-readable storage medium, and a computer program product.

**BACKGROUND**

With the continuous development of data storage technologies, blockchain networks emerge. A blockchain network is a peer-to-peer (peer to peer, P2P) network for distributed data storage, and a node in the peer-to-peer network is a peer (peer) node. Each peer node maintains at least one blockchain, and verifies and stores data by using a blockchain data structure in the blockchain.

As a distributed public ledger, a blockchain features decentralization, openness, and anonymization, and cannot be forged or tampered with. With its unique trust mechanism and information transfer technology, the blockchain is widely used in various fields, promoting transformation of scientific and technological fields.

Currently, in a related technology, a service system of a service is established by using a server and a blockchain network. The blockchain network includes a plurality of nodes, and the plurality of nodes in the blockchain network may be nodes managed by different departments. Specifically, the server may receive a request from a client (which may also be referred to as a user end), and perform classification processing and approval based on the request. Then, the server may upload data exchanged with the client to the blockchain network for storage. Enterprises, institutions, organizations, or other users can create or join a plurality of blockchain networks based on different service requirements. It takes a large amount of time and energy to separately manage each blockchain network.

In addition, each blockchain network is usually independent, and it is difficult to share data between blockchain networks. For example, it is difficult to share data between blockchain networks belonging to different confederations. When a blockchain network is faulty, it is difficult to migrate data stored in a blockchain.

**SUMMARY**

This application provides a blockchain network management method. In the method, a management platform is introduced. The management platform installs an inter-blockchain contract for different blockchain networks such as a heterogeneous blockchain network through a same set of blockchain platform management interfaces, to integrate an inter-blockchain capability, and truly streamline services of the blockchain networks. Data can be migrated between different blockchain networks without adapting to a heterogeneous kernel, thereby reducing improvement costs. This application further provides a management platform for a blockchain network that corresponds to the foregoing method, a computer cluster, a computer-readable storage medium, and a computer program product.

According to a first aspect, an embodiment of this application provides a blockchain network management method. The method may be performed by a management platform for a blockchain network (management platform for short). The management platform may be a software system. The software system is deployed in a computer cluster. The computer cluster runs program code of the software system, to perform the blockchain network management method in embodiments of this application. In some embodiments, the management platform may also be a hardware system having a blockchain network management function, and the hardware system may be one or more computers in a computer cluster.

Specifically, the management platform receives an inter-blockchain application submitted by a user, and then invokes a blockchain platform management interface based on the inter-blockchain application to install an inter-blockchain contract for a first blockchain network and a second blockchain network separately, where the inter-blockchain contract is used by the first blockchain network and the second blockchain network to establish a connection to a relay apparatus separately, and perform an inter-blockchain transaction via the relay apparatus.

The management platform in this embodiment of this application installs an inter-blockchain contract for different blockchain networks such as a heterogeneous blockchain network through a same set of blockchain platform management interfaces, to integrate an inter-blockchain capability, and truly streamline services of the blockchain networks. Data can be migrated between different blockchain networks without adapting to a heterogeneous kernel, thereby reducing improvement costs. In addition, in the method, a complex inter-blockchain procedure is packaged into the management platform, greatly simplifying user operations, improving usability, and ensuring full-lifecycle traceability management of data.

In some possible implementations, the management platform may further obtain the configuration information of the first blockchain network and the configuration information of the second blockchain network, and then register the configuration information of the first blockchain network and the configuration information of the second blockchain network with the relay apparatus.

This helps the first blockchain network and the second blockchain network subsequently establish the connection to the relay apparatus, and further help the first blockchain network and the second blockchain network perform the inter-blockchain transaction via the relay apparatus.

In some possible implementations, the configuration information includes one or more of a connection address of the blockchain network, an application name associated with the blockchain network, a type of the blockchain network, a user identifier, an identity certificate, a certificate key, or a private key.

The configuration information such as the connection address of the blockchain network, the application name associated with the blockchain network, and the type of the blockchain network may assist the relay apparatus in establishing a connection to a blockchain network. The user identifier, the identity certificate, the certificate key, and the private key may assist the relay apparatus in performing identity authentication, to ensure reliability and security.

In some possible implementations, the management platform may receive an inter-blockchain transaction request submitted by the user, and indicate, based on the inter-blockchain transaction request, the relay apparatus to start the inter-blockchain transaction. Then, the relay apparatus sends a submission request to the first blockchain network, receives a first submission proof generated by the first blockchain network by performing transaction submission and a transaction header of the inter-blockchain transaction, and adds a first transaction result to a consensus queue after verification succeeds. The relay apparatus receives a second submission proof generated by the second blockchain network by performing transaction submission and the transaction header of the inter-blockchain transaction, and adds a second transaction result to the consensus queue after verification succeeds. The relay apparatus adds a block to a relay chain based on the first transaction result and the second transaction result that are in the consensus queue, to complete the inter-blockchain transaction.

In this way, an inter-blockchain transaction between different blockchain networks uniformly managed by the management platform is implemented in a relay inter-blockchain manner, to integrate inter-blockchain capabilities into the blockchain networks, and truly streamline services of the blockchain networks. Data can be migrated between different blockchain networks without adapting to a heterogeneous kernel, thereby reducing improvement costs.

In some possible implementations, the management platform may further receive a transaction query request sent by the user, and then the management platform invokes the blockchain platform management interface to query a first blockchain in the first blockchain network and a second blockchain in the second blockchain network, to obtain transaction information. Next, the management platform returns the transaction information to the user.

In the method, interaction between the management platform and a bottom-layer blockchain platform is implemented based on the blockchain platform management interface, thereby querying general blockchain functions such as chain information, a transaction, a block, and a configuration in a standardized manner.

In some possible implementations, the transaction query request is generated based on a service interface provided by the management platform. In this way, unified inter-blockchain operations and maintenance and monitoring can be implemented, facilitating application interconnection and service provisioning of a newly managed chain.

In some possible implementations, the management platform may further verify an inter-blockchain capability of the first blockchain network and an inter-blockchain capability of the second blockchain network, to determine that the first blockchain network and the second blockchain network support inter-blockchain.

In this method, inter-blockchain capability verification is first performed, to detect in advance a blockchain network that does not have an inter-blockchain capability, and a subsequent inter-blockchain procedure is terminated for the blockchain network that does not have the inter-blockchain capability. In this way, an inter-blockchain failure caused by a lack of an inter-blockchain capability of a blockchain network can be avoided.

In some possible implementations, the management platform may verify the inter-blockchain capability of the first blockchain network and the inter-blockchain capability of the second blockchain network according to an inter-blockchain rule, to determine that the first blockchain network and the second blockchain network support inter-blockchain.

The inter-blockchain rule may be a general inter-blockchain rule or a user-defined inter-blockchain rule. Based on the foregoing inter-blockchain rule, automatic inter-blockchain capability verification can be implemented, thereby improving verification efficiency. In addition, inter-blockchain capability verification is performed according to a user-defined inter-blockchain rule, so that different service requirements can be met.

In some possible implementations, the management platform may further manage the relay apparatus in response to a management request for the relay apparatus. In this way, the management platform can implement full-lifecycle management of a relay service, and interact with the relay apparatus, including deployment, relay status query, relay node management, relay gateway management, and the like.

In some possible implementations, the first blockchain network and the second blockchain network are networks in different confederations. In this way, data can be shared between different confederations, thereby improving availability of a blockchain network.

According to a second aspect, this application provides a management platform for a blockchain network. The management platform includes:

an interface module, configured to receive an inter-blockchain application submitted by a user; and

an inter-blockchain service module, configured to invoke a blockchain platform management interface based on the inter-blockchain application to install an inter-blockchain contract for a first blockchain network and a second blockchain network separately, where the inter-blockchain contract is used by the first blockchain network and the second blockchain network to establish a connection to a relay apparatus separately, and perform an inter-blockchain transaction via the relay apparatus.

In some possible implementations, the interface module is further configured to:
obtain configuration information of the first blockchain network and configuration information of the second blockchain network.

The management platform further includes:
a registration module, configured to register the configuration information of the first blockchain network and the configuration information of the second blockchain network with the relay apparatus.

In some possible implementations, the configuration information includes one or more of a connection address of the blockchain network, an application name associated with the blockchain network, a type of the blockchain network, a user identifier, an identity certificate, a certificate key, or a private key.

In some possible implementations, the interface module is further configured to:
receive an inter-blockchain transaction request submitted by the user, and indicate, based on the inter-blockchain transaction request, the relay apparatus to start the inter-blockchain transaction.

The relay apparatus is configured to:
send a submission request to the first blockchain network, receive a first submission proof generated by the first blockchain network by performing transaction submission and a transaction header of the inter-blockchain transaction, and add a first transaction result to a consensus queue after verification succeeds; receive a second submission proof generated by the second blockchain network by performing transaction submission and the transaction header of the inter-blockchain transaction, and add a second transaction result to the consensus queue after verification succeeds; and add a block to a relay chain based on the first transaction result and the second transaction result that are in the consensus queue, to complete the inter-blockchain transaction.

In some possible implementations, the interface module is further configured to:
receive a transaction query request sent by the user.

The management platform further includes:
a query module, configured to: invoke the blockchain platform management interface to query a first blockchain in the first blockchain network and a second blockchain in the second blockchain network, to obtain transaction information; and return the transaction information to the user.

In some possible implementations, the transaction query request is generated based on a service interface provided by the management platform.

In some possible implementations, the management platform further includes:
a verification module, configured to verify an inter-blockchain capability of the first blockchain network and an inter-blockchain capability of the second blockchain network, to determine that the first blockchain network and the second blockchain network support inter-blockchain.

In some possible implementations, the verification module is specifically configured to:
verify, by the management platform, the inter-blockchain capability of the first blockchain network and the inter-blockchain capability of the second blockchain network according to an inter-blockchain rule, to determine that the first blockchain network and the second blockchain network support inter-blockchain.

In some possible implementations, the management platform further includes:
a relay management module, configured to manage the relay apparatus in response to a management request for the relay apparatus.

In some possible implementations, the first blockchain network and the second blockchain network are networks in different confederations.

According to a third aspect, this application provides a computer cluster. The computer cluster includes at least one computer, and the at least one computer includes at least one processor and at least one memory. The at least one processor and the at least one memory communicate with each other. The at least one processor is configured to execute instructions stored in the at least one memory, so that a computer or a computer cluster performs the blockchain network management method according to any one of the first aspect or the implementations of the first aspect.

According to a fourth aspect, this application provides a computer-readable storage medium, where the computer-readable storage medium stores instructions, and the instructions instruct a computer or a computer cluster to perform the blockchain network management method according to any one of the first aspect or the implementations of the first aspect.

According to a fifth aspect, this application provides a computer program product including instructions. When the computer program product runs on a computer or a computer cluster, the computer or the computer cluster performs the blockchain network management method according to any one of the first aspect or the implementations of the first aspect.

In this application, based on the implementations according to the foregoing aspects, the implementations may be further combined to provide more implementations.

## BRIEF DESCRIPTION OF DRAWINGS

To describe the technical methods in embodiments of this application more clearly, the following briefly describes the accompanying drawings for describing embodiments.

FIG. 1 is a schematic of an architecture of a data management system according to an embodiment of this application;
FIG. 2 is a flowchart of a blockchain network management method according to an embodiment of this application;
FIG. 3 is a flowchart of inter-blockchain application according to an embodiment of this application;
FIG. 4 is a flowchart of an inter-blockchain transaction according to an embodiment of this application;
FIG. 5 is a schematic of a structure of a management platform for a blockchain network according to an embodiment of this application; and
FIG. 6 is a schematic of a structure of a computer cluster according to an embodiment of this application.

## DESCRIPTION OF EMBODIMENTS

The terms "first" and "second" in embodiments of this application are merely intended for a purpose of description, and shall not be understood as an indication or implication of relative importance or implicit indication of a quantity of indicated technical features. Therefore, a feature limited by "first" or "second" may explicitly or implicitly include one or more features.

First, some technical terms in embodiments of this application are described.

A blockchain network is a decentralized network including a plurality of nodes. The nodes in the blockchain network are connected in a point-to-point manner to form a peer-to-peer (Peer-to-Peer, P2P) network. In the peer-to-peer network, the nodes do not have a centralized service and a hierarchical structure, and the nodes are equivalent. Therefore, the nodes in the network are also referred to as peer nodes.

The blockchain network is used to provide a distributed ledger and a smart contract (smart contract) service for an application program (which may be referred to as an application for short). Transaction logic is defined in the smart contract. The smart contract is used to generate transactions. These transactions are distributed to each peer node in the blockchain network. Each peer node records these transactions on a ledger copy of the peer node, and the ledger copy cannot be tampered with. The transaction may be usually recorded in a form of a block, different transactions may be recorded in different blocks, and the different blocks may be connected to form a blockchain. Therefore, the ledger copy may be a blockchain.

A management platform for a blockchain network, also referred to as a chain management platform or a management platform, is a system for centralized operation or operations and maintenance of blockchain networks. The system provides open platform interface protocols and standards to allow users to smoothly access various blockchain networks of the system, implementing unified management and monitoring.

Currently, the management platform is usually built at an intermediate layer of a service server and a back-end blockchain network, and manages and controls the blockchain network by providing an open interface. In this method, one-stop management is performed on a blockchain network under a user name, so that operation or operations and maintenance costs can be reduced.

However, each blockchain network is usually independent. Expansion and sub-chain construction of the blockchain network are usually limited to a same blockchain network, and a network scale is limited. In addition, it is difficult to share data between different blockchain networks. For example, it is difficult to share data between blockchain networks belonging to different confederations. When a blockchain network is faulty, it is difficult to migrate data stored in a blockchain.

In view of this, embodiments of this application provide a blockchain network management method. The method may be executed by a management platform. The management platform may be a software system. The software system is deployed in a computer cluster. The computer cluster runs program code of the software system, to perform the blockchain network management method in embodiments of this application. In some embodiments, the management platform may also be a hardware system having a blockchain network management function, and the hardware system may be one or more computers in a computer cluster.

Specifically, the management platform receives an inter-blockchain application submitted by a user, where the inter-blockchain application is for migrating data stored on a first blockchain in a first blockchain network to a second blockchain in a second blockchain network. Then, the management platform invokes a blockchain platform management interface based on the inter-blockchain application to install an inter-blockchain contract for the first blockchain network and the second blockchain network separately. The inter-blockchain contract is used by the first blockchain network and the second blockchain network to establish a connection to a relay apparatus separately, and perform an inter-blockchain transaction via the relay apparatus.

Different from a conventional solution in which a management platform simply lists and manages managed blockchain networks, the management platform in embodiments of this application installs an inter-blockchain contract for different blockchain networks such as a heterogeneous blockchain network through a same set of blockchain platform management interfaces, to integrate an inter-blockchain capability, and truly streamline services of the blockchain networks. Data can be migrated between different blockchain networks without adapting to a heterogeneous kernel, thereby reducing improvement costs. In addition, in the method, a complex inter-blockchain procedure is packaged into the management platform, greatly simplifying user operations, improving usability, and ensuring full-lifecycle traceability management of data.

The blockchain network management method and the management platform in embodiments of this application may be applied to different industries or fields. For example, the management platform may be a management platform for a blockchain network in the financial industry. An inter-blockchain transaction between blockchain networks of different financial organizations can be implemented by performing the blockchain network management method in embodiments of this application. For another example, the management platform may be a management platform for a blockchain network of government affairs. An inter-blockchain transaction between blockchain networks of different organizations or departments (for example, different city tax bureaus) can be implemented by performing the blockchain network management method in embodiments of this application.

To make the technical solutions of this application clearer and easier to understand, the following describes an architecture of a system in embodiments of this application with reference to the accompanying drawings.

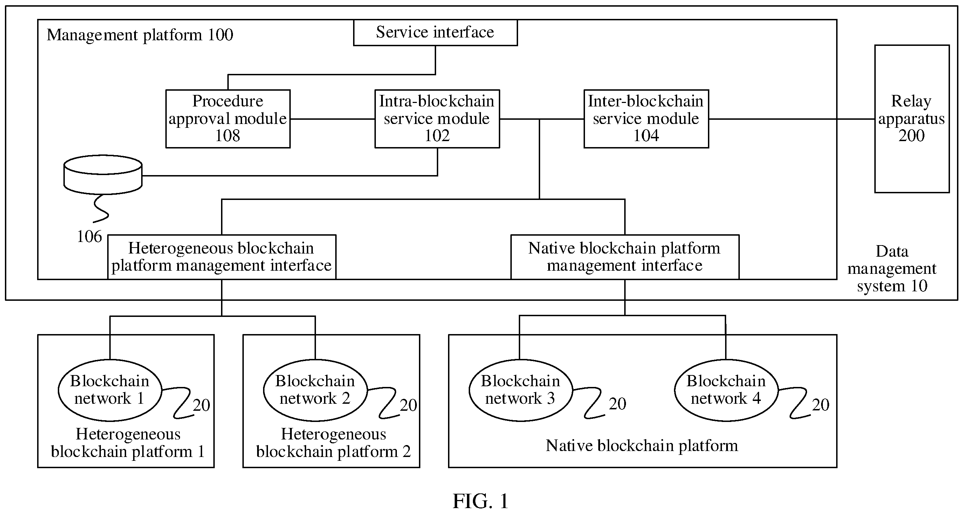

Refer to a schematic of system architecture of a data management system shown in FIG. 1. The data management system 10 includes a management platform 100 and a relay apparatus 200. The management platform 100 may be connected to blockchain networks 20 on different blockchain platforms by using a blockchain platform management interface.

The blockchain network 20 may be established based on a blockchain platform. The blockchain platform is a platform for establishing the blockchain network 20 and managing the blockchain network 20 and a blockchain copy (distributed ledger) in the blockchain network 20. Blockchain platforms can be classified into different types based on different kernels of the blockchain platforms. For example, the blockchain platforms may be classified into different types such as Fabric, Quorum, and Etherium based on the kernels. The foregoing different types of blockchain platforms are also referred to as heterogeneous blockchain platforms. A blockchain network established based on the different types of blockchain platforms is referred to as a heterogeneous blockchain network, and may be referred to as a heterogeneous chain for short. It should be noted that each blockchain network 20 carries at least one type of service logic. Therefore, the blockchain network 20 may also be referred to as a service chain.

In an example in FIG. 1, the blockchain platform management interface may include a heterogeneous blockchain platform management interface. The management platform 100 may be connected to a blockchain network 1 on a heterogeneous blockchain platform 1 and a blockchain network 2 on a heterogeneous blockchain platform 2 through the heterogeneous blockchain platform management interface, to implement unified management of the blockchain network 1 and the blockchain network 2.

When the management platform 100 is a software system or a hardware system on a cloud platform, the management platform 100 may include a native blockchain platform management interface. The management platform 100 may connect blockchain networks, for example, a blockchain network 3 and a blockchain network 4, on a native blockchain platform through the native blockchain platform management interface, to implement unified management of the blockchain network 3 and the blockchain network 4.

In this embodiment, the management platform 100 is configured to receive an inter-blockchain application submitted by a user. The inter-blockchain application is for migrating data stored on a first blockchain in a first blockchain network (for example, the blockchain network 1 in FIG. 1) to a second blockchain in a second blockchain network (for example, the blockchain network 2 in FIG. 1), and then invoke a blockchain platform management interface (for example, the heterogeneous blockchain platform management interface in FIG. 1) based on the inter-blockchain application, to install an inter-blockchain (Inter-BlockChain) contract for the first blockchain network and the second blockchain network separately.

The inter-blockchain contract is a smart contract according to which digital assets and function statuses on two or more different blockchains are transferred, migrated, and exchanged with each other. In this embodiment, the inter-blockchain contract is used by the first blockchain network and the second blockchain network to establish a connection to the relay apparatus 200 separately, and perform an inter-blockchain transaction via the relay apparatus 200.

Similar to the management platform 100, the relay apparatus 200 may be a software apparatus, or may be a hardware apparatus. The relay apparatus 200 may provide a relay service, to add a data structure to a plurality of blockchain networks, so that two blockchain networks can exchange data based on the data structure.

The relay apparatus 200 acts as a data collector, and does not rely on a trusted third party to perform transaction verification. Specifically, the relay apparatus 200 may perform self-verification after obtaining data sent by a blockchain network. A manner of the self-verification varies based on a structure of the relay apparatus 200. For example, BTC-Relay relies on simple payment verification (Simple Payment Verification, SPV) certification, and Cosmos also relies on a quantity of signatures of a verification node.

In this way, the relay apparatus 200 supplements, by using a relay chain, collaboration capabilities of blockchain networks managed by the management platform 100, thereby expanding a service scale, improving flexibility, improving stability of the blockchain networks, and supporting inter-blockchain data migration when data is lost or a system is discarded.

Interaction between the management platform 100 and the relay apparatus 200 is described above, and an internal structure of the management platform 100 is described below. As shown in FIG. 1, from a perspective of service logic, the management platform 100 may include an intra-blockchain service module 102 and an inter-blockchain service module 104.

The intra-blockchain service module 102 is configured to manage the blockchain network 20 (including but not limited to a public chain and a confederation chain). For example, the intra-blockchain service module 102 is configured to create, join, exit, or delete a confederation. For another example, the intra-blockchain service module 102 is configured to create, join, exit, or delete a service chain. The inter-blockchain service module 104 is configured to perform inter-blockchain management on different blockchain networks 20. The inter-blockchain management not only supports homogeneous inter-blockchain management, that is, inter-blockchain management on homogeneous blockchain networks, but also supports heterogeneous management, that is, inter-blockchain management on heterogeneous blockchain networks. The inter-blockchain management includes data migration between different blockchain networks 20. Further, the inter-blockchain management may further include interoperation between different blockchain networks 20, such as inter-blockchain reading, inter-blockchain writing, and inter-blockchain ledger query. Because some blockchain networks 20 do not have an inter-blockchain capability, the inter-blockchain service module 104 further supports configuration of an inter-blockchain rule, determines, according to the inter-blockchain rule, whether a blockchain network 20 supports inter-blockchain, and then installs an inter-blockchain contract for the blockchain network 20 when the blockchain network 20 supports inter-blockchain.

In some possible implementations, the management platform 100 further includes a database 106. The database 106 may store one or more of user data, chain information, a historical management procedure, or an operation record. The user data includes one or more of a user identifier (identifier, ID), an identity certificate, and a certificate key. The user identifier is unique and is for distinguishing different users. The identity certificate is a digital certificate that identifies an identity, and may usually be issued by a digital certificate authority (Certificate Authority, CA). In some embodiments, the identity certificate may be a transport layer security (Transport Layer Security, TLS) certificate. The identity certificate may include a certificate key, and the certificate key may be a public key. In this way, a transmitter (for example, a client of a user) may perform encryption by using the public key, and a receiver (for example, a server such as a service server) may perform decryption based on a private key corresponding to the public key, thereby ensuring data security. The chain information includes information stored on a blockchain, for example, transaction information. The historical management procedure includes a procedure of managing a blockchain network in a historical time period. The operation record includes a record of an operation performed by using the management platform 100. The foregoing historical management procedure may provide reference for subsequent management, and the foregoing operation record may be easily traced.

It should be noted that the management platform 100 further includes a service interface. The service interface is a unified external interface. The management platform 100 may interconnect with service servers (not shown in FIG. 1) of different services through the foregoing service interface, and unify entry user requests through the service interface, including requests such as user registration, chain change and scheduling, chain information obtaining, monitoring and alarming, or node management. The chain change and scheduling includes creating a service chain, joining a service chain, exiting a service chain, deleting a service chain, or the like. The chain information obtaining includes obtaining transaction information stored in a blockchain, and the like. The monitoring and alarming includes performing an alarm prompt when a specified monitoring indicator such as a central processing unit (central processing unit, CPU) utilization rate reaches an alarm threshold. The node management includes adding a node or deleting a node.

Further, the management platform 100 may further include a procedure approval module 108. The procedure approval module 108 is configured to approve and authorize an entry user request, such as an inter-blockchain application, received by the service interface. When an approval result is "approved", the intra-blockchain service module 102 or the inter-blockchain service module 104 may execute, in response to the entry user request, service logic corresponding to the entry user request.

In this embodiment of this application, the management platform 100 is established by using a three-layer architecture of an external service interface, an internal service module, and a bottom-layer blockchain platform management interface. The management platform 100 implements interaction between the management platform 100 and an underlying blockchain platform based on the blockchain platform management interface, to implement inter-blockchain data migration, and query general blockchain functions such as chain information, a transaction, a block, and a configuration based on the service interface in a standardized manner. Standardized interfaces (such as service interfaces and blockchain platform management interfaces) help implement procedure automation, facilitate unified management of heterogeneous blockchain networks on heterogeneous blockchain platforms, and have high scalability.

To make the technical solutions of this application clearer and easier to understand, the following describes the blockchain network management method in embodiments of this application with reference to the accompanying drawings.

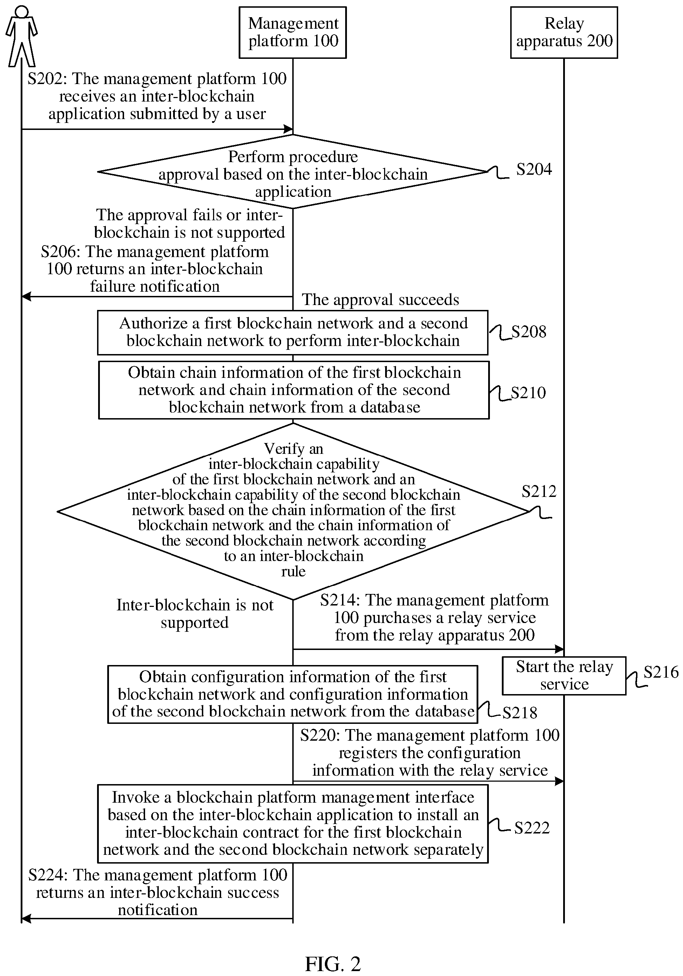

Refer to a flowchart of a blockchain network management method shown in FIG. 2. The method includes the following steps.

S202: A management platform 100 receives an inter-blockchain application submitted by a user.

The inter-blockchain application is for migrating data stored on a first blockchain in a first blockchain network to a second blockchain in a second blockchain network. Based on this, the inter-blockchain application may include an identifier of the first blockchain network and an identifier of the second blockchain network. The identifier of the first blockchain network and the identifier of the second blockchain network are unique, and may be for distinguishing the blockchain networks and other blockchain networks.

Specifically, the user may trigger an inter-blockchain application operation via a client. The client may generate an inter-blockchain application in response to the inter-blockchain application operation of the user, and then submit the inter-blockchain application to the management platform 100. Further, a service server is further included between the client and the management platform 100. The inter-blockchain application may be submitted to the management platform 100 via the service server. In this way, the management platform 100 may receive the inter-blockchain application submitted by the user via the client and the service server.

S204: The management platform 100 performs procedure approval based on the inter-blockchain application; and when an approval result is "not approved", performs S206; or when an approval result is "approved", performs S208.

For a service of high importance or high sensitivity, when a user triggers an inter-blockchain application related to the foregoing service, the management platform 100 may trigger procedure approval. The procedure approval may be that the management platform 100 automatically performs procedure approval. For example, the management platform 100 may automatically perform approval on the inter-blockchain application based on related information carried in the inter-blockchain application, to obtain an approval result. In some embodiments, the management platform 100 may also generate an approval request, and send the approval request to a client corresponding to an approver, so that the approver performs approval on the inter-blockchain application via the client of the approver. Then the management platform 100 obtains an approval result returned by the approver via the client of the approver.

When the approval result is "not approved", it indicates that the current inter-blockchain application is not approved, and the management platform 100 may stop starting an inter-blockchain procedure. The management platform 100 may perform S206, that is, return an inter-blockchain failure notification to the user, so that the user performs subsequent work based on the notification. When the approval result is "approved", it indicates that the current inter-blockchain application is approved, and the management platform 100 performs S208 to start the inter-blockchain procedure.

S206: The management platform 100 returns the inter-blockchain failure notification to the user.

The inter-blockchain failure notification is a notification message for responding to the inter-blockchain application submitted by the user, and the notification message is for notifying the user that inter-blockchain between the first blockchain network and the second blockchain network fails.

In some possible implementations, the inter-blockchain failure notification may further include an inter-blockchain failure reason, and the reason may be represented by using a reason code. The reason code may be a character string, for example, a numeric string, a letter string, or a combination of digits and letters. The following provides descriptions by using an example. In this example, the inter-blockchain failure notification carries a reason code 001, where the reason code 001 indicates that the application is not approved.

It should be noted that S204 to S206 are optional steps in this embodiment of this application, and S204 to S206 may not be performed when the blockchain network management method is performed. For example, alternatively, the management platform 100 may directly perform S208 to perform inter-blockchain after receiving the inter-blockchain application.

S208: The management platform 100 authorizes the first blockchain network and the second blockchain network to perform inter-blockchain.

That the first blockchain network and the second blockchain network perform inter-blockchain includes that the first blockchain network and the second blockchain network share data, or perform interoperation. For example, the first blockchain network writes data to the second blockchain network, or the first blockchain network reads data from the second blockchain network. Therefore, the management platform 100 may authorize access permissions of the first blockchain network and the second blockchain network, to authorize the first blockchain network and the second blockchain network to perform inter-blockchain.

Alternatively, S208 may not be performed when the blockchain network management method is performed. For example, the management platform 100 may preset a whitelist. In this way, there is no need to authorize a blockchain network, for example, the first blockchain network and the second blockchain network, in the whitelist.

S210: The management platform 100 obtains chain information of the first blockchain network and chain information of the second blockchain network from a database.

The chain information includes information about a blockchain copy maintained by each node in a blockchain network, for example, a kernel of the blockchain copy. The kernel includes, but is not limited to, different types such as fabric, quorum, or Ethernet. Further, the chain information may further include one or more of a confederation member or sub-chain information.

The management platform 100 may obtain, from the database, chain information of a blockchain network managed by the management platform 100. The blockchain network managed by the management platform 100 includes the first blockchain network and the second blockchain network. Therefore, the chain information of the first blockchain network and the chain information of the second blockchain network may be obtained.

The database may be a private database of the management platform 100, or may be a third-party database accessed by the management platform 100. This is not limited in this embodiment of this application.

S212: The management platform 100 verifies an inter-blockchain capability of the first blockchain network and an inter-blockchain capability of the second blockchain network based on the chain information of the first blockchain network and the chain information of the second blockchain network according to an inter-blockchain rule. When the management platform 100 determines that the first blockchain network and the second blockchain network support inter-blockchain, S214 is performed. When the management platform 100 determines that the first blockchain network or the second blockchain network does not support inter-blockchain, S206 is performed.

The management platform 100 may set the inter-blockchain rule. The inter-blockchain rule may be set by default, or may be set according to rule content configured by the user. Then, the management platform 100 may match the chain information of the first blockchain network and the chain information of the second blockchain network with the inter-blockchain rule, to verify the inter-blockchain capability of the first blockchain network and the inter-blockchain capability of the second blockchain network. When the matching succeeds, it indicates that the first blockchain network and the second blockchain network support inter-blockchain. Otherwise, the first blockchain network and the second blockchain network do not support inter-blockchain.

When the first blockchain network or the second blockchain network does not support inter-blockchain, the management platform 100 may stop performing an inter-blockchain procedure, and perform S206 to return an inter-blockchain failure notification to the user. It should be noted that, the inter-blockchain failure notification may carry an inter-blockchain failure reason. In some embodiments, a reason code of the inter-blockchain failure reason may be 002, and is for identifying that the first blockchain network and the second blockchain network do not support inter-blockchain. Therefore, an inter-blockchain failure is caused. When the first blockchain network and the second blockchain network support inter-blockchain, the management platform 100 may perform S214 to start a subsequent procedure.

It should be noted that S210 and S212 are an implementation in which the management platform 100 verifies the inter-blockchain capability of the first blockchain network and the inter-blockchain capability of the second blockchain network. In another possible implementation of this embodiment of this application, the management platform 100 may set another verification rule, for example, a rule related to a sub-chain or a rule related to a confederation member, and verify the inter-blockchain capability of the first blockchain network and the inter-blockchain capability of the second blockchain network based on the verification rule. In some embodiments, the management platform 100 may directly perform a subsequent inter-blockchain procedure without performing the foregoing verification step.

S214: The management platform 100 purchases a relay service from a relay apparatus 200.

In this embodiment, the management platform 100 may implement inter-blockchain in a relay manner. Specifically, the relay apparatus 200 may provide a relay service in a form of a cloud service, and the management platform 100 may purchase the relay service from the relay apparatus 200 as required.

S216: The relay apparatus 200 starts the relay service.

The relay service may be a service encapsulated in a container or a service encapsulated in a virtual machine. Correspondingly, the relay apparatus 200 may start the container by using a container engine, to start the relay service.

Alternatively, the relay apparatus 200 may start the virtual machine by using a virtual machine deployment engine, to start the relay service.

S218: The management platform 100 obtains configuration information of the first blockchain network and configuration information of the second blockchain network from the database.

The configuration information includes one or more of a connection address of the blockchain network, an application name associated with the blockchain network, a type of the blockchain network, a user identifier, an identity certificate, a certificate key (for example, a TLS key), or a private key. In some embodiments, the configuration information may be expressed as:

$$\text{ConfigData} = \{\text{Address}, \text{Name}, \text{Type}, \text{UserID}, \text{Certificate}, \text{TLS}, \text{priKey}$$

$$(1)$$

The database of the management platform 100 stores configuration information of the blockchain network managed by the management platform 100. Based on this, the management platform 100 may obtain the configuration information of the first blockchain network and the configuration information of the second blockchain network from the database.

S220: The management platform 100 registers the configuration information of the first blockchain network and the configuration information of the second blockchain network with the relay service of the relay apparatus 200.

Specifically, the management platform 100 may invoke an inter-blockchain gateway to register the configuration information of the first blockchain network and the configuration information of the second blockchain network with the relay service of the relay apparatus 200. The relay service may maintain a registry, and the management platform 100 may write the configuration information into the registry of the relay service through the inter-blockchain gateway, to register the configuration information with the relay service.

S218 to S220 are an implementation in which the management platform 100 registers the configuration information of the first blockchain network and the configuration information of the second blockchain network with the relay apparatus. In some possible implementations, the management platform 100 may directly register the configuration information with the relay apparatus without registering the configuration information with the relay service of the relay apparatus.

S222: The management platform 100 invokes a blockchain platform management interface based on the inter-blockchain application to install an inter-blockchain contract for the first blockchain network and the second blockchain network separately.

The blockchain platform management interface may implement interaction with different underlying blockchain platforms. Based on this, the management platform 100 determines, based on the inter-blockchain application, that a blockchain network that needs to perform inter-blockchain is the first blockchain network and the second blockchain network, and may install the inter-blockchain contract for the first blockchain network and the second blockchain network separately through the blockchain platform management interface.

The management platform 100 may install the inter-blockchain contract for the first blockchain network and the second blockchain network in a remote control manner. The inter-blockchain contract is a decentralized application, including a plurality of smart contracts deployed on different blockchain networks. These smart contracts can communicate with each other and form a complete application.

The inter-blockchain contract is used by the first blockchain network and the second blockchain network to establish a connection to the relay apparatus separately, and perform an inter-blockchain transaction via the relay apparatus. Specifically, the first blockchain network and the second blockchain network may initialize an inter-blockchain software development kit (software development kit, SDK), and establish a link between the inter-blockchain SDK and the relay service, to subsequently perform the inter-blockchain transaction.

S224: The management platform 100 returns an inter-blockchain success notification.

The inter-blockchain success notification is a notification message for responding to the inter-blockchain application submitted by the user, and the notification message is for notifying the user that inter-blockchain between the first blockchain network and the second blockchain network succeeds.

S224 is an optional step in this embodiment of this application, and S224 may not be performed when the blockchain network management method in this embodiment of this application is performed.

Based on the foregoing content descriptions, this embodiment of this application provides the blockchain network management method. In the method, the management platform 100 installs an inter-blockchain contract for different blockchain networks such as a heterogeneous blockchain network through a same set of blockchain platform management interfaces, to integrate an inter-blockchain capability, and truly streamline services of the blockchain networks. Data can be migrated between different blockchain networks without adapting to a heterogeneous kernel, thereby reducing improvement costs. In addition, in the method, a complex inter-blockchain procedure is packaged into the management platform, greatly simplifying user operations, improving usability, and ensuring full-lifecycle traceability management of data.

Based on the embodiment shown in FIG. 2, the relay apparatus 200 may implement the inter-blockchain transaction between the first blockchain network and the second blockchain network. In some embodiments, the inter-blockchain transaction may be migrating data from the first blockchain network to the second blockchain network. For example, the inter-blockchain transaction may be migrating a digital asset of the first blockchain network to the second blockchain network. Further, the inter-blockchain transaction may further include migrating a digital asset of the second blockchain network to the first blockchain network. For example, the digital asset of the first blockchain network is Ethernet coin ETH, and the digital asset of the second blockchain network is bitcoin BTC. The inter-blockchain transaction may be that an account A in the first blockchain network sends 50 ETH to an account B in the second blockchain network, and the account B in the second blockchain network sends one BTC to the account A in the first blockchain network.

Specifically, a user may submit an inter-blockchain transaction request to the management platform 100 via a client. After receiving the inter-blockchain transaction request, the management platform 100 may interact with the relay apparatus 200, and indicate the relay apparatus 200 to start an inter-blockchain transaction. An inter-blockchain service module 104 of the management platform 100 may process the inter-blockchain transaction request, generate an inter-blockchain transaction start indication, and then send the inter-blockchain transaction start indication to the relay apparatus 200, to indicate the relay apparatus 200 to start the inter-blockchain transaction.

Specifically, the inter-blockchain transaction start indication may carry transaction information of the inter-blockchain transaction. The transaction information may include identifiers of a transmitter and a receiver of the inter-blockchain transaction and a transaction amount of the inter-blockchain transaction. For example, the transaction information may include a source address (for identifying an account on a blockchain network), a destination address (for identifying an account on another blockchain network), and a quantity of digital assets.

The relay apparatus 200 may perform format conversion based on the transaction information of the inter-blockchain transaction, to obtain transaction information in a target format. The target format includes a format supported by the first blockchain network. Then, the relay apparatus 200 may generate a submission request based on the transaction information in the target format, and the first blockchain network performs transaction submission based on the submission request, and generates a first submission proof. The first submission proof may include a transaction hash. Then, the first blockchain network may send the first submission proof and a transaction header of the inter-blockchain transaction to the relay apparatus 200. The transaction header may include the identifiers of the transmitter and the receiver of the inter-blockchain transaction and the transaction amount of the inter-blockchain transaction. The relay apparatus 200 may verify the inter-blockchain transaction based on the first submission proof and the transaction header, and may specifically verify whether the inter-blockchain transaction actually exists. Then, the relay apparatus 200 may add a first transaction result to a consensus queue after the verification succeeds. The first transaction result is for representing that submission by the first blockchain network succeeds or fails.

The first blockchain network may further send a submission request to the second blockchain network, and the second blockchain network performs transaction submission based on the submission request, and generates a second submission proof. Similarly, the second submission proof may include a transaction hash. Then, the second blockchain network may send the second submission proof and the transaction header of the inter-blockchain transaction to the relay apparatus 200. The relay apparatus 200 verifies the inter-blockchain transaction based on the second submission proof and the transaction header, and adds a second transaction result to the consensus queue after the verification succeeds. The second transaction result is for representing that submission by the second blockchain network succeeds or fails.

The relay apparatus 200 may add a block to a relay chain based on the first transaction result and the second transaction result that are in the consensus queue, to complete the inter-blockchain transaction.

In some possible implementations, a two-phase submission mechanism may be further used between the relay apparatus 200 and a blockchain network to complete an inter-blockchain transaction. Specifically, the relay apparatus 200 may first send a pre-submission request to the first blockchain network, and the first blockchain network performs pre-submission, generates a corresponding first pre-submission proof, and then sends the first pre-submission proof and the transaction header of the inter-blockchain transaction to the relay apparatus 200. The relay apparatus 200 performs verification based on the first pre-submission proof and the transaction header of the inter-blockchain transaction, and adds a first pre-submission result to a consensus queue after the verification succeeds. In addition, the first blockchain network sends a pre-submission request to the second blockchain network. The second blockchain network performs pre-submission, generates a corresponding second pre-submission proof, and then sends the second pre-submission proof and the transaction header of the inter-blockchain transaction to the relay apparatus 200. The relay apparatus 200 performs verification based on the second pre-submission proof and the transaction header of the inter-blockchain transaction, and adds a second pre-submission result to the consensus queue after the verification succeeds.

In this way, the relay apparatus 200 may add a block to the relay chain based on the first pre-submission result, the second pre-submission result, the first transaction result, and the second transaction result that are in the consensus queue, to complete the inter-blockchain transaction.

In some possible implementations, the management platform 100 may further support, by using an external service interface, the user in querying transaction information, a contract, or block information. Transaction information query is used as an example. The user may trigger a transaction query operation via the client, and the client may generate a transaction query request in response to the transaction query operation. The transaction query request is generated based on the service interface provided by the management platform 100. The management platform 100 receives the transaction query request submitted by the user via the client, invokes a blockchain platform management interface, and interacts with a blockchain network on an underlying blockchain platform, to obtain transaction information. Then, the management platform 100 may return a query result, where the query result includes the transaction information.

The following describes in detail, with reference to a specific scenario, the inter-blockchain application and inter-blockchain transaction procedures in the blockchain network management method.

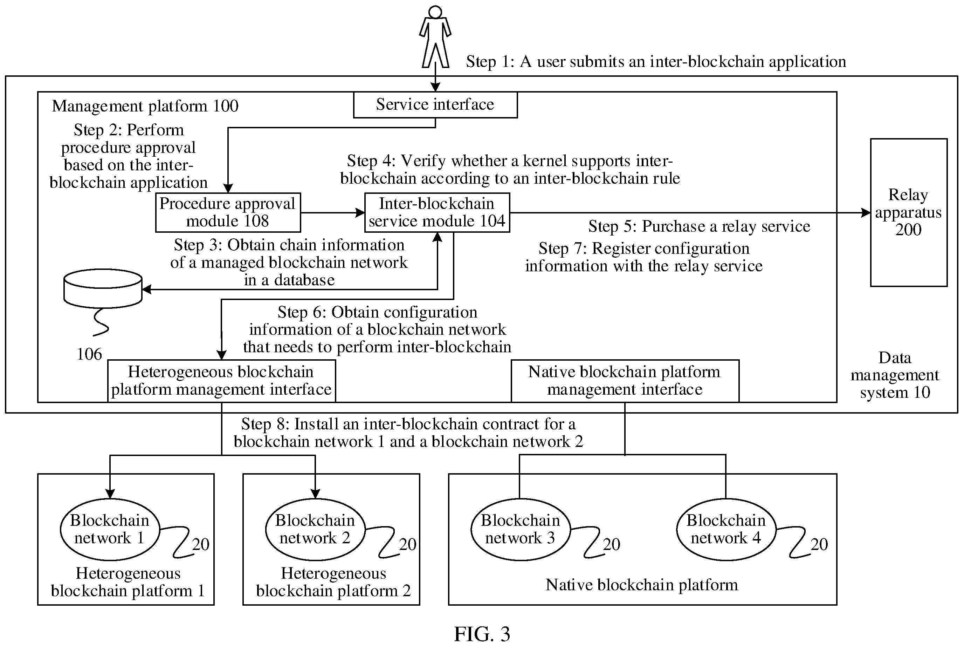

Refer to a flowchart of inter-blockchain application shown in FIG. 3. The following steps are specifically included.

Step 1: A user submits an inter-blockchain application to a management platform 100.

The inter-blockchain application is for applying for inter-blockchain between a blockchain network 1 and a blockchain network 2. The inter-blockchain application may include identifiers of the blockchain network 1 and the blockchain network 2. The blockchain network 1 and the blockchain network 2 may be networks in different confederations.

Step 2: A procedure approval module of the management platform 100 performs procedure approval based on the inter-blockchain application, and performs step 3 to start an inter-blockchain procedure after the approval is granted.

Step 3: An inter-blockchain service module of the management platform 100 obtains chain information of a managed blockchain network in a database.

Step 4: The inter-blockchain service module of the management platform 100 verifies an inter-blockchain capability of the blockchain network 1 and an inter-blockchain capability of the blockchain network 2 based on chain information of the blockchain network 1 and chain information of the blockchain network 2 according to an inter-blockchain rule. When a verification result is that the blockchain network 1 and the blockchain network 2 support inter-blockchain.

Step 5: The inter-blockchain service module of the management platform 100 purchases a relay service from a relay apparatus 200.

Step 6: The inter-blockchain service module of the management platform 100 obtains configuration information of the blockchain network 1 and configuration information of the blockchain network 2.

Step 7: The management platform 100 registers the configuration information with the relay service.

The management platform 100 may manage the relay apparatus 200 in response to a management request for the relay apparatus 200. Specifically, the management platform 100 may deploy a relay, query a relay status, and manage a relay node, a relay gateway, and the like in response to the management request for the relay apparatus 200, thereby implementing full-lifecycle management of the relay service.

Step 8: The management platform 100 invokes a blockchain network management interface to install an inter-blockchain contract for the blockchain network 1 and the blockchain network 2.

In this way, data silos can be resolved, inter-blockchain data migration capabilities can be provided, high disaster recovery can be implemented, stability can be improved, and information authenticity and reliability can be ensured.

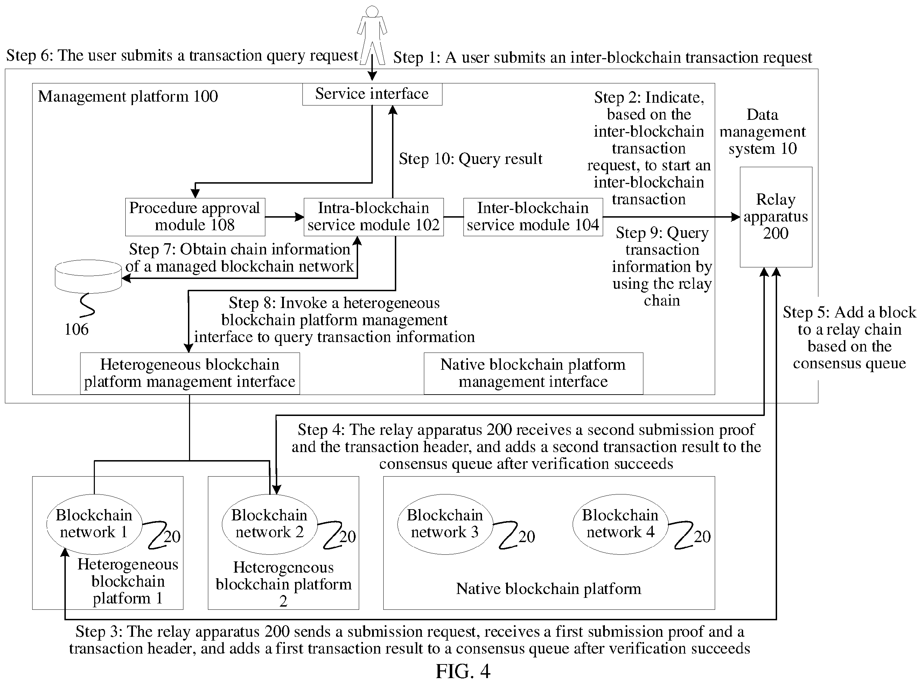

Next, refer to a flowchart of an inter-blockchain transaction shown in FIG. 4. The following steps are included.

Step 1: A user submits an inter-blockchain transaction request to a management platform 100.

Specifically, the user may send a download request to the management platform 100 via a client, to download, from the management platform 100, a connection address, an identity certificate, and a certificate key of a blockchain network 1, a connection address, an identity certificate, and a certificate key of a blockchain network 2, and the like, and then generate the inter-blockchain transaction request based on the connection addresses, the identity certificates, and the certificate keys of the blockchain network 1 and the blockchain network 2. The inter-blockchain transaction request is for requesting to perform a transaction between the blockchain network 1 and the blockchain network 2. For example, an account A in the blockchain network 1 sends N first digital assets to an account B in the blockchain network 2, and receives M second digital assets sent by the account B in the blockchain network 2, where N and M are positive numbers.

Step 2: The management platform 100 indicates, based on the inter-blockchain transaction request, a relay apparatus 200 to start an inter-blockchain transaction.

In the embodiment shown in FIG. 3, the management platform 100 has started the relay service on the relay apparatus 200, and may interact with the relay apparatus 200 (for example, the relay service on the apparatus), to indicate the relay apparatus 200 to start the inter-blockchain transaction.

Step 3: The relay apparatus 200 sends a submission request to the blockchain network 1, receives a first submission proof and a transaction header that are sent by the blockchain network 1, and adds a first transaction result to a consensus queue after the verification succeeds.

Specifically, the relay apparatus 200 may first perform format conversion on transaction information of the inter-blockchain transaction, to obtain transaction information in a target format, generate the submission request based on the transaction information in the target format, and then send the submission request to the blockchain network 1. The blockchain network 1 performs transaction submission based on the submission request, and generates the first submission proof. Then, the blockchain network 1 may send the first submission proof and a transaction header of the inter-blockchain transaction to the relay apparatus 200. The relay apparatus 200 verifies the inter-blockchain transaction based on the first submission proof and the transaction header of the inter-blockchain transaction, and adds the first transaction result to the consensus queue after the verification succeeds.

It should be noted that the relay apparatus 200 may first send a pre-submission request to the blockchain network 1, receive a first pre-submission proof and the transaction header that are sent by the blockchain network 1, and add a first pre-submission result to the consensus queue after the verification succeeds.

Step 4: The relay apparatus 200 receives a second submission proof and the transaction header that are sent by the blockchain network 2, and adds a second transaction result to the consensus queue after the verification succeeds.

The blockchain network 2 may receive the submission request sent by the blockchain network 1, perform transaction submission, generate the second submission proof, and then send the second submission proof and the transaction header to the relay apparatus 200. The relay apparatus 200 verifies the inter-blockchain transaction based on the second submission proof and the transaction header and adds the second transaction result to the consensus queue after the verification succeeds.

When the blockchain network 1 performs pre-submission, the blockchain network 1 may further send a pre-submission request to the blockchain network 2. The blockchain network 2 performs pre-submission, and generates a second pre-submission proof. Then, the blockchain network 2 may send the second pre-submission proof and the transaction header to the relay apparatus 200. After the verification succeeds, the relay apparatus 200 adds a second pre-submission result to the consensus queue.

Step 5: The relay apparatus 200 adds a block to a relay chain based on the first transaction result and the second transaction result in the consensus queue.

Specifically, when the first transaction result represents that the submission succeeds, and the second transaction result represents that the submission succeeds, the relay apparatus 200 may generate a block recording the transaction information, and add the block to the relay chain, to complete the inter-blockchain transaction.

Step 6: The user submits a transaction query request to the management platform 100.

Step 7: The management platform 100 obtains chain information of a blockchain network managed by the management platform 100 from a database.

Step 8: The management platform 100 invokes a blockchain platform management interface based on the chain information to interact with the blockchain network 1 and the blockchain network 2, to obtain transaction information.

Further, the management platform 100 may further interact with the blockchain network 1 and the blockchain network 2, to obtain a block list.

Step 9: The management platform 100 queries transaction information by using the relay chain.

Specifically, the management platform 100 may interact with the relay apparatus 200, to query the relay chain in the relay apparatus 200 to obtain the transaction information.

Step 10: The management platform 100 returns a query result.

The query result may include the transaction information obtained in step 8 and step 9.

This method implements data sharing and information transfer between different single chains, streamlines the blockchain network, and implements unified inter-blockchain operations and maintenance and monitoring, while ensuring reliability, security, and privacy. This facilitates application interconnection and service provisioning of a newly managed blockchain network. In addition, the method does not require manual intervention, and an inter-blockchain procedure is simplified.

Based on the blockchain network management method provided in embodiments of this application, embodiments of this application further provide the foregoing management platform 100 of the blockchain network. The following describes, with reference to the accompanying drawings, the management platform 100 of the blockchain network provided in embodiments of this application.

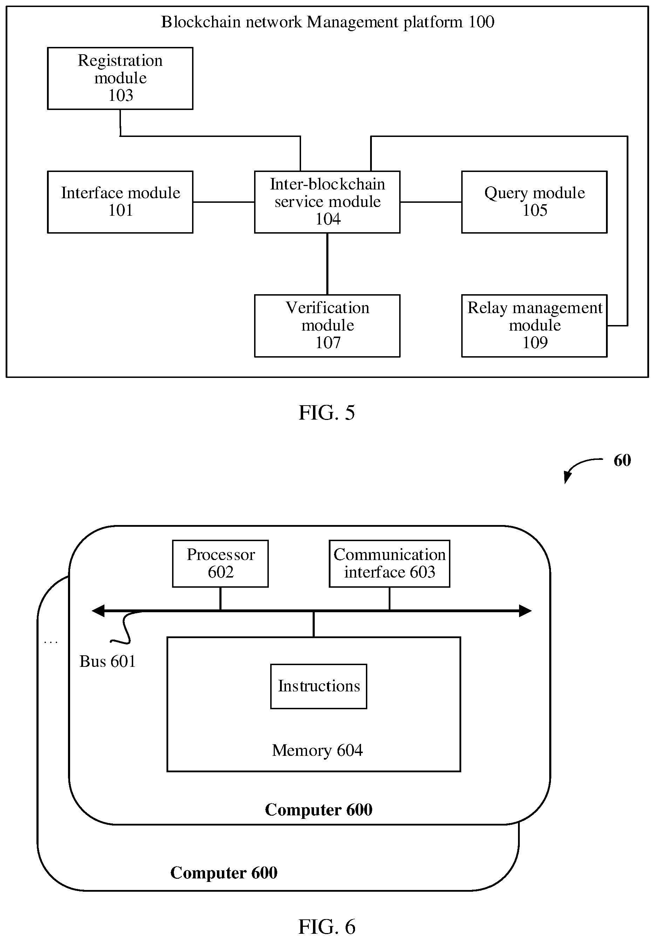

Refer to a diagram of a structure of the management platform 100 of the blockchain network shown in FIG. 5. The management platform 100 includes:

an interface module 101, configured to receive an inter-blockchain application submitted by a user; and
an inter-blockchain service module 104, configured to invoke a blockchain platform management interface based on the inter-blockchain application to install an inter-blockchain contract for a first blockchain network and a second blockchain network separately, where the inter-blockchain contract is used by the first blockchain network and the second blockchain network to establish a connection to a relay apparatus separately, and perform an inter-blockchain transaction via the relay apparatus.

The interface module 101 (not shown in FIG. 1) provides at least one interface, configured to perform data exchange. For example, the interface module 101 may include a service interface. The inter-blockchain application submitted by the user may be received through the service interface.

In some possible implementations, the interface module 101 is further configured to:

obtain configuration information of the first blockchain network and configuration information of the second blockchain network.

The management platform 100 further includes:

a registration module 103 (not shown in FIG. 1), configured to register the configuration information of the first blockchain network and the configuration information of the second blockchain network with the relay apparatus.

In some possible implementations, the configuration information includes one or more of a connection address of the blockchain network, an application name associated with the blockchain network, a type of the blockchain network, a user identifier, an identity certificate, a certificate key, or a private key.

In some possible implementations, the interface module 101 is further configured to:

receive an inter-blockchain transaction request submitted by the user, and indicate, based on the inter-blockchain transaction request, the relay apparatus to start the inter-blockchain transaction.

The relay apparatus 200 is configured to:

send a submission request to the first blockchain network, receive a first submission proof generated by the first blockchain network by performing transaction submission and a transaction header of the inter-blockchain transaction, and add a first transaction result to a consensus queue after verification succeeds; receive a second submission proof generated by the second blockchain network by performing transaction submission and the transaction header of the inter-blockchain transaction, and add a second transaction result to the consensus queue after verification succeeds; and add a block to a relay chain based on the first transaction result and the second transaction result that are in the consensus queue, to complete the inter-blockchain transaction.

In some possible implementations, the interface module 101 is further configured to:

receive a transaction query request sent by the user.

The management platform 100 further includes:

a query module 105 (not shown in FIG. 1), configured to: invoke the blockchain platform management interface to query a first blockchain in the first blockchain network and a second blockchain in the second blockchain network, to obtain transaction information; and return the transaction information to the user.

In some possible implementations, the transaction query request is generated based on a service interface provided by the management platform 100.

In some possible implementations, the management platform 100 further includes:

a verification module 107, configured to verify an inter-blockchain capability of the first blockchain network and an inter-blockchain capability of the second blockchain network, to determine that the first blockchain network and the second blockchain network support inter-blockchain.

In some possible implementations, the verification module 107 is specifically configured to:

verify, by the management platform, the inter-blockchain capability of the first blockchain network and the inter-blockchain capability of the second blockchain network according to an inter-blockchain rule, to determine that the first blockchain network and the second blockchain network support inter-blockchain.

In some possible implementations, the management platform 100 further includes:

a relay management module 109, configured to manage the relay apparatus in response to a management request for the relay apparatus 200.

In some possible implementations, the first blockchain network and the second blockchain network are networks in different confederations.

The management platform 100 for the blockchain network according to embodiments of this application may correspondingly perform the method described in embodiments of this application, and the foregoing and other operations and/or functions of the modules/units of the management platform 100 for the blockchain network are separately used to implement corresponding procedures of the methods in the embodiment shown in FIG. 2. For brevity, details are not described herein again.

Embodiments of this application further provide a computer cluster. The computer cluster includes at least one computer, and any one of the at least one computer may be from a cloud environment or an edge environment, or may be a terminal device. The computer cluster is specifically configured to implement a function of the management platform 100 for the blockchain network in the embodiment shown in FIG. 5.

FIG. 6 provides a schematic of a structure of a computer cluster. As shown in FIG. 6, a computer cluster 60 includes a plurality of computers 600. The computer 600 includes a bus 601, a processor 602, a communication interface 603, and a memory 604. The processor 602, the memory 604, and the communication interface 603 communicate with each other through the bus 601.

The bus 601 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of indication, the bus is indicated by only one bold line in FIG. 6. However, it does not indicate that there is only one bus or only one type of bus.

The processor 602 may be any one or more of processors such as a central processing unit (central processing unit, CPU), a graphics processing unit (graphics processing unit, GPU), a microprocessor (microprocessor, MP), or a digital signal processor (digital signal processor, DSP).

The communication interface 603 is configured to communicate with the outside. For example, the communication interface 603 is configured to receive an inter-blockchain application submitted by a user, or receive an inter-blockchain transaction request.

The memory 604 may include a volatile memory (volatile memory), for example, a random access memory (random access memory, RAM). The memory 604 may further include a non-volatile memory (non-volatile memory), for example, a read-only memory (read-only memory, ROM), a flash memory, a hard disk drive (hard disk drive, HDD), or a solid state drive (solid state drive, SSD).

The memory 604 stores computer-readable instructions, and the processor 602 executes the computer-readable instructions, so that the computer cluster 60 performs the foregoing blockchain network management method (or implements the functions of the foregoing management platform 100).

Specifically, when the embodiment of the management platform 100 shown in FIG. 5 is implemented, and functions of modules, such as the interface module 101, the inter-blockchain service module 104, the registration module 103, the query module 105, the verification module 107, or the relay management module 109, of the management platform 100 described in FIG. 5 are implemented by using software, software or program code required for executing the functions of the modules in FIG. 5 may be stored in at least one memory 604 in the computer cluster 60. At least one processor 602 executes the program code stored in the memory 604, so that the computer cluster 60 performs the foregoing blockchain network management method.

Embodiments of this application further provide a computer-readable storage medium. The computer-readable storage medium may be any usable medium that can be stored by a computer, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instruction instructs a computer or a computer cluster to perform the foregoing blockchain network management method.

Embodiments of this application further provide a computer program product. The computer program product includes one or more computer instructions. When the computer instructions are loaded and executed on the computer, the procedure or functions according to embodiments of this application are all or partially generated. The computer instructions may be stored in a computer-readable storage medium, or may be transmitted from one computer-readable storage medium to another computer-readable storage medium. For example, the computer instructions may be transmitted from a website, a computer, or a data center to another website, computer, or data center in a wired (for example, a coaxial cable, an optical fiber, or a digital subscriber line (DSL)) or wireless (for example, infrared, radio, or microwave) manner. The computer program product may be a software installation package. When any one of the foregoing blockchain network management methods needs to be used, the computer program product may be downloaded and executed on a computer or a computer cluster.

Descriptions of procedures or structures corresponding to the accompanying drawings have respective focuses. For a part that is not described in detail in a procedure or structure, refer to related descriptions of other procedures or structures.

**Claims**

1. A blockchain network management method, wherein the method comprises:

   receiving, by a management platform for a blockchain network, an inter-blockchain application submitted by a user; and
   invoking, by the management platform, a blockchain platform management interface based on the inter-blockchain application to install an inter-blockchain contract for a first blockchain network and a second blockchain network separately, wherein the inter-blockchain contract is used by the first blockchain network and the second blockchain network to establish a connection to a relay apparatus separately, and perform an inter-blockchain transaction via the relay apparatus.

2. The method according to claim 1, wherein the method further comprises:

obtaining, by the management platform, configuration information of the first blockchain network and configuration information of the second blockchain network; and

registering, by the management platform, the configuration information of the first blockchain network and the configuration information of the second blockchain network with the relay apparatus.

3. The method according to claim 2, wherein the configuration information comprises one or more of a connection address of the blockchain network, an application name associated with the blockchain network, a type of the blockchain network, a user identifier, an identity certificate, a certificate key, or a private key.

4. The method according to any one of claims 1 to 3, wherein the method further comprises:

receiving, by the management platform, an inter-blockchain transaction request submitted by the user, and indicating, based on the inter-blockchain transaction request, the relay apparatus to start the inter-blockchain transaction;

sending, by the relay apparatus, a submission request to the first blockchain network, receiving a first submission proof generated by the first blockchain network by performing transaction submission and a transaction header of the inter-blockchain transaction, and adding a first transaction result to a consensus queue after verification succeeds;

receiving, by the relay apparatus, a second submission proof generated by the second blockchain network by performing transaction submission and the transaction header of the inter-blockchain transaction, and adding a second transaction result to the consensus queue after verification succeeds; and

adding, by the relay apparatus, a block to a relay chain based on the first transaction result and the second transaction result that are in the consensus queue, to complete the inter-blockchain transaction.

5. The method according to claim 4, wherein the method further comprises:

receiving, by the management platform, a transaction query request sent by the user;

invoking, by the management platform, the blockchain platform management interface to query a first blockchain in the first blockchain network and a second blockchain in the second blockchain network, to obtain transaction information; and

returning, by the management platform, the transaction information to the user.

6. The method according to claim 5, wherein the transaction query request is generated based on a service interface provided by the management platform.

7. The method according to any one of claims 1 to 6, wherein the method further comprises:
verifying, by the management platform, an inter-blockchain capability of the first blockchain network and an inter-blockchain capability of the second blockchain network, to determine that the first blockchain network and the second blockchain network support inter-blockchain.

8. The method according to claim 7, wherein the verifying, by the management platform, an inter-blockchain capability of the first blockchain network and an inter-blockchain capability of the second blockchain network, to determine that the first blockchain network and the second blockchain network support inter-blockchain comprises:
verifying, by the management platform, the inter-blockchain capability of the first blockchain network and the inter-blockchain capability of the second blockchain network according to an inter-blockchain rule, to determine that the first blockchain network and the second blockchain network support inter-blockchain.

9. The method according to any one of claims 1 to 8, wherein the method further comprises:
managing, by the management platform, the relay apparatus in response to a management request for the relay apparatus.

10. The method according to any one of claims 1 to 9, wherein the first blockchain network and the second blockchain network are networks in different confederations.

11. A management platform for a blockchain network, wherein the management platform comprises:

an interface module, configured to receive an inter-blockchain application submitted by a user; and
an inter-blockchain service module, configured to invoke a blockchain platform management interface based on the inter-blockchain application to install an inter-blockchain contract for a first blockchain network and a second blockchain network separately, wherein the inter-blockchain contract is used by the first blockchain network and the second blockchain network to establish a connection to a relay apparatus separately, and perform an inter-blockchain transaction via the relay apparatus.

12. The management platform according to claim 11, wherein the interface module is further configured to:

obtain configuration information of the first blockchain network and configuration information of the second blockchain network; and
the management platform further comprises:
a registration module, configured to register the configuration information of the first blockchain network and the configuration information of the second blockchain network with the relay apparatus.

13. The management platform according to claim 12, wherein the configuration information comprises one or more of a connection address of the blockchain network, an application name associated with the blockchain network, a type of the blockchain network, a user identifier, an identity certificate, a certificate key, or a private key.

14. The management platform according to any one of claims 11 to 13, wherein the interface module is further configured to:

receive an inter-blockchain transaction request submitted by the user, and indicate, based on the inter-blockchain transaction request, the relay apparatus to start the inter-blockchain transaction; and
the relay apparatus is configured to:
send a submission request to the first blockchain network, receive a first submission proof generated by the first blockchain network by performing transaction submission and a transaction header of the inter-blockchain transaction, and add a first transaction result to a consensus queue after verification succeeds; receive a second submission proof generated by the second blockchain network by performing transaction submission and the transaction header of the inter-blockchain transaction, and add a second transaction result to the consensus queue after verification succeeds; and add a block to a relay chain based on the first transaction result and the second transaction result that are in the consensus queue, to complete the inter-blockchain transaction.

15. The management platform according to claim 14, wherein the interface module is further configured to:

receive a transaction query request sent by the user; and
the management platform further comprises:
a query module, configured to: invoke the blockchain platform management interface to query a first blockchain in the first blockchain network and a second blockchain in the second blockchain network, to obtain transaction information; and return the transaction information to the user.

16. The management platform according to claim 15, wherein the transaction query request is generated based on a service interface provided by the management platform.

17. The management platform according to any one of claims 11 to 16, wherein the management platform further comprises:
a verification module, configured to verify an inter-blockchain capability of the first blockchain network and an inter-blockchain capability of the second blockchain network, to determine that the first blockchain network and the second blockchain network support inter-blockchain.

18. The management platform according to claim 17, wherein the verification module is specifically configured to:
verify, by the management platform, the inter-blockchain capability of the first blockchain network and the inter-blockchain capability of the second blockchain network according to an inter-blockchain rule, to determine that the first blockchain network and the second blockchain network support inter-blockchain.

19. The management platform according to any one of claims 11 to 18, wherein the management platform further comprises:
a relay management module, configured to manage the relay apparatus in response to a management request for the relay apparatus.

20. The management platform according to any one of claims 11 to 19, wherein the first blockchain network and the second blockchain network are networks in different confederations.

21. A computer cluster, wherein the computer cluster comprises at least one computer, the at least one computer comprises at least one processor and at least one memory, the at least one memory stores computer-readable instructions, and the at least one processor executes the computer-readable instructions, so that the computer cluster performs the method according to any one of claims 1 to 10.

22. A computer-readable storage medium, comprising computer-readable instructions, wherein the computer-readable instructions are for implementing the method according to any one of claims 1 to 10.

23. A computer program product, comprising computer-readable instructions, wherein the computer-readable instructions are for implementing the method according to any one of claims 1 to 10.

Relay apparatus 200

Management platform 100

Service interface

Procedure approval module 108

Intra-blockchain service module 102

Inter-blockchain service module 104

106

Heterogeneous blockchain platform management interface

Native blockchain platform management interface

Data management system 10

Blockchain network 1

Heterogeneous blockchain platform 1

Blockchain network 2

Heterogeneous blockchain platform 2

Blockchain network 3

Blockchain network 4

Native blockchain platform

20

FIG. 1

S202: The management platform 100 receives an inter-blockchain application submitted by a user

Perform procedure approval based on the inter-blockchain application          S204

The approval fails or inter-blockchain is not supported
S206: The management platform 100 returns an inter-blockchain failure notification

The approval succeeds

Authorize a first blockchain network and a second blockchain network to perform inter-blockchain          S208

Obtain chain information of the first blockchain network and chain information of the second blockchain network from a database          S210

Verify an inter-blockchain capability of the first blockchain network and an inter-blockchain capability of the second blockchain network based on the chain information of the first blockchain network and the chain information of the second blockchain network according to an inter-blockchain rule          S212

Inter-blockchain is not supported

S214: The management platform 100 purchases a relay service from the relay apparatus 200

Start the relay service          S216

Obtain configuration information of the first blockchain network and configuration information of the second blockchain network from the database          S218

S220: The management platform 100 registers the configuration information with the relay service

Invoke a blockchain platform management interface based on the inter-blockchain application to install an inter-blockchain contract for the first blockchain network and the second blockchain network separately          S222

S224: The management platform 100 returns an inter-blockchain success notification

Management platform 100

Relay apparatus 200

FIG. 2

Step 1: A user submits an inter-blockchain application

Management platform 100

Service interface

Step 2: Perform procedure approval based on the inter-blockchain application

Step 4: Verify whether a kernel supports inter-blockchain according to an inter-blockchain rule

Procedure approval module 108

Inter-blockchain service module 104

Step 5: Purchase a relay service

Step 7: Register configuration information with the relay service

Step 3: Obtain chain information of a managed blockchain network in a database

Relay apparatus 200

Step 6: Obtain configuration information of a blockchain network that needs to perform inter-blockchain

106

Heterogeneous blockchain platform management interface

Native blockchain platform management interface

Data management system 10

Step 8: Install an inter-blockchain contract for a blockchain network 1 and a blockchain network 2

Blockchain network 1    20

Blockchain network 2    20

Blockchain network 3    20

Blockchain network 4    20

Heterogeneous blockchain platform 1

Heterogeneous blockchain platform 2

Native blockchain platform

FIG. 3

Step 6: The user submits a transaction query request    Step 1: A user submits an inter-blockchain transaction request

Management platform 100

Service interface

Step 2: Indicate, based on the inter-blockchain transaction request, to start an inter-blockchain transaction

Data management system 10

Step 10: Query result

Procedure approval module 108 → Intra-blockchain service module 102 → Inter-blockchain service module 104

Relay apparatus 200

Step 7: Obtain chain information of a managed blockchain network

Step 9: Query transaction information by using the relay chain

106

Step 8: Invoke a heterogeneous blockchain platform management interface to query transaction information

Step 5: Add a block to a relay chain based on the consensus queue

Heterogeneous blockchain platform management interface

Native blockchain platform management interface

Step 4: The relay apparatus 200 receives a second submission proof and the transaction header, and adds a second transaction result to the consensus queue after verification succeeds

Blockchain network 1    20
Heterogeneous blockchain platform 1

Blockchain network 2    20
Heterogeneous blockchain platform 2

Blockchain network 3    20

Blockchain network 4    20

Native blockchain platform

Step 3: The relay apparatus 200 sends a submission request, receives a first submission proof and a transaction header, and adds a first transaction result to a consensus queue after verification succeeds

FIG. 4

EP 4 521 329 A1

Blockchain network Management platform 100

Registration
module
103

Interface module
101

Inter-blockchain
service module
104

Query module
105

Verification
module
107

Relay management
module
109

FIG. 5

60

Processor
602

Communication
interface 603

...

Bus 601

Instructions

Memory 604

Computer 600

Computer 600

FIG. 6

## INTERNATIONAL SEARCH REPORT

| International application No. |
|---|
| **PCT/CN2023/081316** |

**A. CLASSIFICATION OF SUBJECT MATTER**

G06Q 40/04(2012.01)i

According to International Patent Classification (IPC) or to both national classification and IPC

**B. FIELDS SEARCHED**

Minimum documentation searched (classification system followed by classification symbols)

IPC: G06Q, G06F

Documentation searched other than minimum documentation to the extent that such documents are included in the fields searched

Electronic data base consulted during the international search (name of data base and, where practicable, search terms used)

CNTXT, ENTXT, CNKI: 区块链, 跨链, 跨区块链, 中继, 调用, 安装, 合约, 交易, block chain, across chain, across block chain, relay, call, install, agreement, contract, business

**C. DOCUMENTS CONSIDERED TO BE RELEVANT**

| Category* | Citation of document, with indication, where appropriate, of the relevant passages | Relevant to claim No. |
|---|---|---|
| X | CN 108269190 A (SHENZHEN FORMS SYNTRON INFORMATION CO., LTD.) 10 July 2018 (2018-07-10) description, paragraphs 33-65, and figure 3 | 1-23 |
| A | CN 112488679 A (CHEN PENG et al.) 12 March 2021 (2021-03-12) entire document | 1-23 |
| A | US 2019251199 A1 (KLIANEV, Ivan) 15 August 2019 (2019-08-15) entire document | 1-23 |
| A | US 2019340267 A1 (INTERNATIONAL BUSINESS MACHINES CORPORATION) 07 November 2019 (2019-11-07) entire document | 1-23 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **11 May 2023** | **19 May 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/081316**

| Patent document cited in search report | | | Publication date (day/month/year) | Patent family member(s) | Publication date (day/month/year) |
|---|---|---|---|---|---|
| CN | 108269190 | A | 10 July 2018 | None | |
| CN | 112488679 | A | 12 March 2021 | None | |
| US | 2019251199 | A1 | 15 August 2019 | None | |
| US | 2019340267 | A1 | 07 November 2019 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202210705932